(19) Europäisches Patentamt
European Patent Office
Office européen des brevets

(11) **EP 2 272 379 B1**

(12) **FASCICULE DE BREVET EUROPEEN**

(45) Date de publication et mention
de la délivrance du brevet:
**21.12.2011 Bulletin 2011/51**

(51) Int Cl.:
***A23J 1/14*** *(2006.01)*     ***A23J 3/26*** *(2006.01)*
***A23L 1/20*** *(2006.01)*

(21) Numéro de dépôt: **10175573.4**

(22) Date de dépôt: **25.07.2006**

(54) **Proteines de pois texturees**

Texturierte Proteine aus Erbsen

Textured pea proteins

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **05.08.2005 FR 0508397**

(43) Date de publication de la demande:
**12.01.2011 Bulletin 2011/02**

(62) Numéro(s) de document de la (des) demande(s)
initiale(s) en application de l'article 76 CBE:
**06794214.4 / 1 915 061**

(73) Titulaire: **Roquette Frères
62136 Lestrem (FR)**

(72) Inventeurs:
• **Boursier, Bernard
62138 Violaines (FR)**
• **Delebarre, Marie
62136 La Couture (FR)**

• **Lis, José
59253 La Gorgue (FR)**
• **Marquilly, Philippe
59320 Ennetieres en Weppes (FR)**

(74) Mandataire: **Cabinet Plasseraud
52, rue de la Victoire
75440 Paris Cedex 09 (FR)**

(56) Documents cités:
**WO-A-2004/110162**     **FR-A- 2 340 054**
**FR-A- 2 827 123**     **US-A- 3 870 812**
**US-A- 4 169 090**     **US-A- 4 435 438**
**US-A- 4 766 204**     **US-A- 5 972 119**
**US-A1- 2004 091 600**

• **WANG N ET AL: "Extrusion texturization of airclassified pea protein" JOURNAL OF FOOD
SCIENCE, INSTITUTE OF FOOD
TECHNOLOGISTS, CHICAGO, IL, US, vol. 64, no.
3, 1999, pages 509-513, XP002217135 ISSN:
0022-1147**

**Description**

La présente invention est relative à des protéines de pois texturées destinées aux applications alimentaires, tant pour l'homme que pour les animaux, ainsi qu'à leur procédé de fabrication.

La technique de texturation des protéines, notamment par « filage humide », dans le but de préparer des produits à structure fibreuse destinés à la réalisation d'analogues de viande et de poisson, a été appliquée à de nombreuses sources végétales (US 3,870,812)

Historiquement, les premières protéines utilisées comme analogues de viande ont été extraites du soja et du blé. Le soja est ensuite rapidement devenu la source principale pour ce domaine d'applications.

Si la plupart des études qui ont suivi ont naturellement porté sur les protéines de soja, d'autres sources de protéines, tant animales que végétales, ont été texturées : protéines d'arachide, de sésame, de graines de coton, de tournesol, de mais, de blé, protéines issues de microorganismes, de sous-produits d'abattoirs ou de l'industrie du poisson.

Les protéines de légumineuses telles que celles issues du pois et de la féverole ont fait aussi l'objet de travaux, tant dans le domaine de leur isolement que dans celui de leur texturation (FR 2 340 054).

De nombreuses études ont été entreprises sur les protéines de pois, étant donné leurs propriétés fonctionnelles et nutritives particulières, mais aussi pour leur caractère non génétiquement modifié.

Malgré les efforts de recherche importants, la pénétration de ces produits base protéines de pois sur le marché alimentaire est restée très limitée. Leur coût élevé les réserve à des marchés spécifiques d'ampleur limitée tels que celui des produits diététiques.

D'après les auteurs de l'article de la revue dans Sciences des aliments, (J. CULIOLI et P. SALE, vol 5 (1985), pp 177-196), une des causes de cet échec relatif réside dans le fait que les premiers procédés de filage sont des procédés complexes et coûteux, et que les fibres obtenues ne présentaient pas de caractéristiques organoleptiques très satisfaisantes.

Ainsi, ces procédés mettent en oeuvre une matière première élaborée (isolat protéique) et comportent de nombreuses étapes coûteuses tant en main d'oeuvre qu'en produits chimiques.

La difficulté majeure rencontrée classiquement pour texturer une composition de protéines de pois est que celle-ci doit présenter une richesse en protéines de plus de 50 % pour être texturée.

Les isolats de protéines de pois, présentant un contenu en protéines totales de 90 à 95 % sont alors plus particulièrement choisis pour ce domaine d'applications.

De plus, les propriétés mécaniques ainsi que la capacité de rétention d'eau des fibres obtenues sont souvent très éloignées des caractéristiques recherchées pour imiter les produits fibreux traditionnels tel que la viande et le poisson.

Un certain nombre de procédés ont été proposés afin de remédier à cet inconvénient ; les procédés qui visent à texturer les protéines seules par d'autres techniques que le filage humide, tel que le filage en voie sèche ou voie semi-fondue, ou la texturation de protéines de pois en mélange avec d'autres protéines ou des polysaccharides.

Un des premiers procédés de texturation des protéines seules par voie semi-fondue qui ait été développé a consisté à redissoudre des protéines précipitées et à les passer à travers une filière vers un bain de précipitation.

Le matériel fibreux résultant est ensuite retravaillé par compactage, enrobage et cuisson.

Ce procédé nécessite un matériel de départ coûteux, les isolats de protéines, et nécessite un investissement de départ important en appareillages de compactage, enrobage et cuisson.

Le procédé le plus prometteur reste celui de la cuisson extrusion des protéines, qui consiste à cuire en continu du matériel protéique conditionné, de manière à traiter une masse « plastique » à travers des étapes de chauffage, de pression et de cisaillement mécanique (cf la revue de Laurie KEELER de septembre 2004 publiée sur www.Preparedfoods.com, FR 2 827 123)

En plus de son pouvoir texturant, le procédé d'extrusion-cuisson apporte des propriétés importantes aux protéines, tel que l'abaissement de leur solubilité, l'augmentation de leur digestibilité, la désactivation thermique des inhibiteurs de croissance sensibles à la température, leur séchage partiel et généralement, la diminution de leur charge microbienne.

Cependant, un certain nombre de facteurs limitants gênent la texturation des protéines de pois, comme notamment leur teneur en matières grasses. Une trop grande proportion dans la fraction protéique à extruder nécessite en effet un effet de cisaillement plus important (donc plus d'énergie) pour obtenir un résultat industriellement acceptable.

Il est classiquement admis que plus de 3 % de teneur en matières grasses interfère avec le procédé de texturation durant l'extrusion. Par exemple, seule la mise en oeuvre d'énergies thermique et mécanique supplémentaires peut permettre d'obtenir un produit acceptable lorsque la teneur en matières grasses est de l'ordre de 6 à 7 %. Au delà, la qualité des produits texturés baisse très rapidement.

Une autre solution technique retenue a consisté à texturer les protéines de pois avec des polysaccharides, tel l'amidon (cf article de ALONSO et al, dans Journal of the Science of Food and Agriculture, 80 (2000), 397-403).

Il s'agit de « diluer » les protéines des isolats de pois avec de l'amidon, préférentiellement un amidon de pois, ce qui permet un gain substantiel de matières premières.

Cette solution est décrite comme permettant à la fois de :

- réduire les coûts en incorporant un peu moins de protéines, et ainsi texturer des matières premières moins élaborées que les isolats protéiques, et
- compenser les médiocres propriétés de rétention d'eau habituellement constatées des fibres obtenues à partie des isolats de protéines seuls, par l'ajout d'un ingrédient, en l'occurrence l'amidon.

En outre, l'amidon possède des propriétés fonctionnelles intéressantes qui devaient permettre d'améliorer sensiblement les caractéristiques des fibres, notamment leur teneur en eau.

Cependant, la présence de trop grandes proportions d'amidon, tout comme celle de trop grandes proportions de matières grasses avec les protéines à texturer, conduit à bloquer les interactions ou le pontage des molécules de protéines entre elles, interactions pourtant nécessaires pour obtenir de bonnes propriétés texturantes permettant de mimer les produits de type viande.

Par ailleurs, l'amidon se trouve dans les graines sous forme insoluble ; les granules atteignant des tailles jusqu'à 40 $\mu$m peuvent modifier les caractéristiques rhéologiques des protéines de pois, et donc les conditions dans lesquelles elles seront texturées.

Finalement, si l'incorporation d'amidon dans les fibres de protéines végétales permet d'améliorer la texture des produits extrudés par accroissement de leur capacité de rétention d'eau et la diminution modérée de leur résistance mécanique, cet effet n'est surtout marqué qu'après la gélatinisation des grains d'amidon.

Toutefois, le gonflement des grains d'amidon au cours de la gélatinisation provoque un très fort accroissement de la consistance du matériel à extruder, ce qui rend les opérations d'extrusion très délicates. Il est même recommandé de réaliser l'extrusion à des pH inférieurs à 12,5 avec des grains d'amidon non modifiés et de n'effectuer la gélatinisation que sur le produit fini après incorporation d'un liant.

Par ailleurs, il est nécessaire d'incorporer de l'amidon entre 10 et 30 % afin d'obtenir les propriétés de résistance mécanique attendues.

Une autre solution technique a consisté à réaliser l'extrusion des protéines de pois en mélange avec d'autres protéines, telles les protéines de blé (cf l'article de LUCAS dans Food Trade Review, 66-9 (1996),53), ce qui permet d'abaisser la teneur en matières grasses et d'augmenter le contenu en protéines totales de la matière végétale à extruder.

Il apparaît que l'extrusion des protéines de pois seules n'est guère efficace afin d'obtenir des produits texturés acceptables, et que les solutions techniques sont plutôt leur coupage avec des polysaccharides (tel l'amidon) ou d'autres protéines.

Toutefois, il est admis que la qualité des compositions protéiques du pois, et donc la qualité des protéines de pois texturées résultantes, est directement dépendante des conditions opératoires mises en oeuvre pour les préparer.

C'est ainsi que WANG et al., dans Journal of Food Science, 64-3 (1999), 509-513 se sont proposés d'étudier l'influence des conditions d'extrusion sur les propriétés fonctionnelles et nutritionnelles des protéines de pois texturées, protéines de pois préparées à l'aide du procédé d'extraction par voie sèche dite de classification par air.

Ces auteurs concluent que la texturation desdites protéines obtenues par classification par air est parfaitement réalisable, et conduit à des produits présentant des propriétés fonctionnelles équivalentes aux protéines de soja texturées.

Cependant, il est nécessaire d'adapter finement les conditions d'extrusion pour y parvenir. Le degré d'humidité, la vitesse d'extrusion et la température influent sur lesdites propriétés fonctionnelles des protéines texturées ; l'augmentation de l'humidité induit une augmentation de la densité des produits obtenus et la biodisponibilité en lysine, mais diminue sa capacité de rétention d'eau. Au contraire, l'augmentation de la vitesse d'extrusion a l'effet inverse.

La température influe directement sur la densité et la biodisponibilité en lysine des produits texturées de manière inversement proportionnelle.

De tout ce qui précède, il résulte qu'il existe un besoin non satisfait de disposer d'une composition de protéines de pois à haute teneur en protéines dont la qualité et les caractéristiques structurales leur permettront à la fois d'être aisément texturables, sans qu'il ne soit nécessaire d'exercer un contrôle trop contraignant des conditions de mise en oeuvre de la cuisson-extrusion, et de conduire à des produits texturés dont les propriétés fonctionnelles les destineront efficacement à être utilisées dans les applications alimentaires, notamment comme analogues de viandes.

La Société Demanderesse a eu le mérite de concilier tous ces objectifs réputés jusqu'alors difficilement conciliables en proposant une composition de protéines de pois granulée, caractérisée en ce qu'elle présente :

- une teneur en protéines sur matière sèche comprise entre 70 et 95 % en poids sur sec, de préférence comprise entre 70 et 90 % en poids sur sec, plus préférentiellement entre 70 et 88 % en poids sur sec et plus préférentiellement encore compris entre 80 et 85 % en poids sur sec.
- un diamètre moyen compris entre 150 et 300 $\mu$m,
- une valeur de compressibilité, mesurée par la méthode HOSOKAWA comprise entre 5 et 15 %, de préférence comprise entre 8 et 13 %.

Il est du mérite de la société Demanderesse de choisir cette qualité particulière de protéines de pois, dont les paramètres structuraux sont calibrés de manière à optimiser le fonctionnement subséquent de l'extrudeuse (alimentation de l'extrudeuse, température et pression de fonctionnement, vitesse des vis), comme il sera expliqué ci-après.

La composition de protéines de pois granulée présente une teneur en protéines sur matière sèche comprise entre 70 et 95 % en poids sur sec, de préférence comprise entre 70 et 90 % en poids sur sec, plus préférentiellement entre 70 et 88 % en poids sur sec et plus préférentiellement encore compris entre 80 et 85 % en poids sur sec.

La Société Demanderesse a donc été à l'encontre d'un préjugé technique qui veut que la fabrication de protéines de pois texturées nécessite de mettre en oeuvre des isolats de protéines de pois à plus forte teneur en protéines (90 à 95 %).

La détermination de la teneur en protéines de ladite composition protéique est réalisée par la méthode de détermination de l'azote selon la méthode de DUMAS dans des échantillons dont la teneur présumée en azote est supérieure à 0,030 % (poids/poids), selon la norme NF V 18-120 - mars 1997.

La teneur en azote ou en protéines (N x 6,25) est exprimée en grammes pour 100 grammes de produit sec.

La composition de protéines de pois granulée présente également un diamètre moyen compris entre 150 et 300 $\mu$m.

Ces valeurs du diamètre moyen sont déterminées à partir des valeurs de répartition granulométrique de l'échantillon considéré.

Cette répartition granulométrique est exprimée en % en poids de particules retenues sur des tamis vibrant de type ALPINE de mailles particulières, tamis équipé d'un aspirateur et d'un manomètre permettant de vérifier la pression de fonctionnement.

On utilise pour cela 10 tamis de maille 800 $\mu$m, 500 $\mu$m, 315 $\mu$m, 250 $\mu$m, 200 $\mu$m, 150 $\mu$m, 100 $\mu$m, 80 $\mu$m, 63 $\mu$m, 50 $\mu$m et 40 $\mu$m, on détermine le poids de la fraction des particules retenues sur chaque tamis en effectuant la pesée sur une balance de laboratoire de sensibilité 1/100$^{\text{ème}}$ de gramme, et on exprime le refus en pourcentage en masse de produit tel quel.

Le tamisage s'effectue sur un échantillon de 50 g, laissé sur tamis vibrant pendant 3 minutes.

La dépression est réglée de manière à ce qu'au cours du tamisage, celle-ci soit comprise entre 3.000 et 3.500 Pa.

Le calcul du diamètre moyen est ensuite réalisé par la méthode de détermination de l'uniformité d'une poudre selon HOSOKAWA. On reporte sur papier semi-logarithmique le pourcentage des particules passées à travers le tamis en fonction des tailles de particules en $\mu$m.

Le diamètre moyen est la valeur de taille des particules correspondant à 50 % de particules passées à travers le tamis.

La composition de protéines de pois granulée est également caractérisée par son aptitude à l'écoulement, exprimée par sa valeur de compressibilité selon HOSOKAWA.

Les valeurs de compressibilité de la composition de protéines de pois granulée sont déterminées en utilisant l'appareil POWDER TESTER type PTE commercialisé par la société HOSOKAWA, en suivant les spécifications du constructeur.

Cet appareil permet de mesurer, dans des conditions standardisées et reproductibles, l'aptitude à l'écoulement d'une poudre en mesurant notamment la densité aérée vrac et la densité tassée vrac et ensuite de calculer, à partir de ces données les valeurs de compressibilité par la formule suivante :

$$\text{Compressibilité (\%)} = \frac{(\text{densité tassée} - \text{densité aérée})}{\text{Densité tassée}} \times 100$$

La valeur de compressibilité est un facteur très important pour trouver les caractéristiques d'écoulement d'un produit granulé.

Selon le mode d'emploi de l'appareil PTE d'HOSOKAWA, quand la valeur de compressibilité est d'environ 20 %, la poudre ne présente pas d'écoulement libre et a tendance à former des voûtes dans la trémie. Pour des valeurs particulières de compressibilité de 40 - 50 %, il devient même impossible de décharger le matériel de la trémie une fois que le matériel y a été stocké.

La composition de protéines de pois granulée présentant une valeur de compressibilité comprise entre 5 et 15 %, de préférence comprise entre 8 et 13%, présente un écoulement tout à fait convenable, contrairement aux isolats de protéines de pois disponibles dans le commerce, comme il sera exemplifié ci-après.

La composition de protéines de pois granulée peut être également caractérisée par sa densité tassée, cette mesure étant réalisée par l'utilisation de l'appareil POWDER TESTER de type PTE, comme mentionné ci-avant, selon la méthode préconisée dans le mode d'emploi dudit POWDER TESTER (réglage par défaut sur 180 secousses).

Dans ces conditions, la composition de protéines de pois granulée présente une densité tassée comprise entre 0,450 et 0,650 g/ml, de préférence comprise entre 0,550 et 0,600 g/ml.

Ces paramètres de densité, d'aptitude à l'écoulement et de diamètre moyen rendent la composition granulée particulièrement adaptée aux opérations d'extrusion auxquelles on peut les destiner.

A la connaissance de la société Demanderesse, il n'existe pas dans l'état de la technique de composition de protéines de pois granulée présentant de telles caractéristiques structurales.

A titre d'exemple, les isolats de protéines de pois commercialisés sous le nom de marque PISANE® HD par la société COSUCRA S.A. (Momalle - Belgique) ou commercialisé sous le nom de marque PROPULSE™ par la société PARRHEIM (Canada) présentent, pour une densité tassée équivalente à la composition de protéines de pois granulée, une granulométrie plus fine et une valeur de compressibilité de l'ordre de 45 % qui ne les destine particulièrement pas aux opérations de cuisson-extrusion.

En effet, il se crée classiquement des zones de compression au sein du procédé d'extrusion proprement dit. Si la poudre à extruder présente une valeur de compressibilité élevée (ce que l'on explique généralement par la présence de grande quantité d'air emprisonnée dans la poudre), des poches de compression élevée vont se créer dans le dispositif de convoyage, et le fonctionnement de l'appareil en sera fortement perturbé.

Au contraire, la composition de protéine de pois granulée possède une excellente aptitude à l'écoulement (exprimée par une valeur de compressibilité faible), ce qui la rend particulièrement adaptée à l'opération de cuisson extrusion.

Par ailleurs, ces valeurs de compressibilité faible sont recherchées pour alimenter l'extrudeuse, car la poudre doit être stockée dans une trémie et ensuite dans un doseur volumétrique avant d'être extrudée.

Les propriétés d'écoulement de la protéine de pois granulée permettent d'assurer une alimentation régulière en matière dans l'extrudeur.

Il est important de noter également que le principe de l'extrudeur est de réaliser un convoyage en continu d'un certain volume de matière. En conséquence, pour une même vitesse de rotation de la vis, plus la densité du produit à convoyer sera élevée, plus la productivité sera importante.

La protéine de pois granulée présente une densité élevée, qui la rend tout à fait conforme à ce cahier des charges.

La composition de protéines de pois granulée est également caractérisée par son degré d'humidité résiduelle, et sa teneur en matière grasse extractible.

Le degré d'humidité est déterminé par thermogravimétrie sur l'appareil TG 50 commercialisé par la société METTLER TOLEDO.

20 mg exactement d'échantillon sont placés dans le creuset en oxyde d'aluminium de l'appareil. L'échantillon est chauffé de 25 à 160°C à la vitesse de 10°C/min dans un four, balayé par un gaz inerte à un débit de 20 ml/min. La variation en poids de l'échantillon est enregistrée au cours du temps.

L'exploitation de la courbe de perte de poids (détermination de la pente de la courbe en fonction de la température via le logiciel de traitement des données fourni par le constructeur de l'appareil) conduit à la teneur en eau de l'échantillon, exprimée en % en poids.

La composition de protéines de pois granulée présente ainsi un degré d'humidité résiduel compris entre 8 et 12 % en poids.

La composition de protéines de pois granulée est enfin caractérisée par sa teneur en matière grasse extractible, comprise entre 0,5 et 5 % en poids sur sec, de préférence comprise entre 0,5 et 3 % en poids sur sec, plus préférentiellement comprise entre 0,5 et 1,5 % en poids sur sec.

Ce test de mesure de la teneur en matières grasses extractibles consiste à déterminer la teneur en lipides extractibles selon le procédé A de la 2ème directive CEE amendée par celle du 20 décembre 1983, publiée au JOCE de 18 janvier 1984, - repris dans la NF V18-117 d'août 1997 « échantillons de catégorie A ».

Le principe de cette méthode repose sur l'extraction par l'hexane des lipides d'un échantillon de 25 g dans un extracteur de type SOXHLET (le débit du reflux doit être réglé de façon à obtenir 10 cycles par heure), l'élimination du solvant et la pesée du résidu ainsi obtenu.

La teneur en lipides extractibles est exprimée en pourcentage en poids du résidu par rapport aux 25 g d'échantillon analysé.

La composition de protéines de pois granulée présente alors une teneur en matière grasse extractible, comprise entre 0, 5 et 5 % en poids sur sec, de préférence comprise entre 0, 5 et 3 % en poids sur sec, plus préférentiellement comprise entre 0,5 et 1,5 % en poids sur sec.

Le faible degré d'humidité, et cette faible teneur en matières grasses extractibles participent à rendre la composition de protéines de pois granulée conforme à l'invention particulièrement bien adaptée aux opérations de cuisson extrusion auxquelles elle est destinée.

La composition de protéines de pois granulée est susceptible d'être obtenue en mettant en oeuvre les étapes suivantes.

L'extraction des composants de la farine de pois peut être réalisée par tout moyen et en particulier selon le procédé décrit dans la demande de brevet EP 1.400.537 dont la société Demanderesse est titulaire.

Plus particulièrement ce procédé consiste dans la succession des étapes suivantes :

- préparer une farine par broyage de pois secs préalablement nettoyés, triés, émondés, dépoussiérés,
- mettre en suspension la farine de pois dans de l'eau,
- fractionner ladite suspension de manière à isoler une fraction riche en protéines,
- isoler la composante protéique de ladite fraction par une technique de floculation thermique au pH isoélectrique desdites protéines et à une température comprise entre 40 et 70°C pendant de 10 à 30 minutes,
- centrifuger le mélange précipité à l'aide d'une décanteuse centrifuge ou d'une séparatrice à assiettes de manière à récupérer les protéines solubles dans le précipité,
- diluer le précipité dans de l'eau pour obtenir une matière sèche comprise entre 15 et 25 %,
- rectifier le pH de la solution à une valeur comprise entre 7 et 7,5,
- éventuellement, traiter thermiquement ledit précipité remis en suspension dans de l'eau à une température de 75 à 95°C pendant de 10 minutes à 1 heure,
- granuler et sécher ladite solution dans une tour d'atomisation,
- récupérer la composition de protéines de pois granulée ainsi obtenue.

Dans une première étape du procédé, la farine obtenue à partir de pois préalablement nettoyés, triés, émondés, dépoussiérés et broyés est mise en suspension dans de l'eau.

Le pH de la solution n'est pas un facteur limitant, mais on choisit de ne pas rectifier le pH de la suspension, ce qui conduit à travailler dans une gamme de pH compris entre 6,2 et 7.

De manière avantageuse, la société Demanderesse recommande de placer la farine dans de l'eau à une température comprise entre 5 et 20°C, de préférence de l'ordre de 15°C, préférentiellement à une température de 10°C, refroidie de manière à limiter le développement de bactéries indésirables.

Bien que cela ne soit pas indispensable, il peut être choisi de laisser diffuser la suspension dans ce milieu aqueux pendant un temps court compris entre 5 min et 2 heures, à cette température comprise de 5 à 20°C, de préférence de l'ordre de 15°C, préférentiellement à une température de 10°C, préférentiellement à température ambiante.

Dans une deuxième étape du procédé, on choisit de fractionner ladite suspension de farine dans l'eau à l'aide d'un équipement choisi dans le groupe constitué des hydrocyclones et des décanteurs centrifuges, de manière à isoler une fraction riche en protéines et en solubles.

Dans un premier mode préféré de réalisation de cette deuxième étape, le fractionnement de la suspension de farine dans l'eau consiste à fractionner ladite suspension sur des décanteurs centrifuges, de manière à isoler une fraction riche en protéines et solubles d'une fraction constituée du mélange amidon et fibres interne.

Dans un deuxième mode préféré de réalisation de cette deuxième étape, le fractionnement de la suspension de farine dans l'eau consiste à fractionner ladite suspension sur des hydrocyclones, de manière à isoler une fraction riches en amidon d'une fraction constituée du mélange protéines, fibres internes et solubles, puis à traiter la fraction constituée du mélange de protéines, de fibres internes et solubles sur des décanteurs centrifuges de manière à séparer une fraction riche en fibres internes d'une fraction riche en protéines et solubles.

Dans une troisième étape du procédé, on isole les protéines de la fraction renfermant le mélange de protéines et de solubles ainsi obtenu (que ce soit par le premier ou le deuxième mode préféré), par une technique choisie dans le groupe des techniques de précipitation des protéines à leur pH isoélectrique et des techniques de séparation membranaire de type ultrafiltration.

Il est avantageusement choisi de réaliser la floculation thermique des protéines, en ajustant la fraction riche en protéines à une valeur de pH correspondant au point isoélectrique (pI) des dites protéines, i.e. à une valeur de pH de l'ordre de 4,5.

On procède ensuite à la floculation desdites protéines à une température comprise entre 40 et 70°C pendant de 10 à 30 minutes.

Ce diagramme temps/température de floculation permet ainsi d'obtenir un rendement de récupération des protéines compris entre 65 et 85 % de protéines extraites / protéines totales.

La séparation du précipité (encore appelé « floc ») renfermant les protéines solubles s'effectue sur décanteur centrifuge ou sur séparatrice à assiettes.

Le surnageant est ensuite dirigé vers des installations d'évaporation, de manière à le concentrer jusqu'à une matière sèche de 30 à 35 %.

Le floc est ensuite dilué jusqu'à une matière sèche comprise entre 15 et 25 % afin de permettre son acheminement vers les installations d'atomisation pour être granulé, séché et conditionné.

Le pH de cette solution diluée est ensuite rectifié à un pH compris entre 7 et 7,5.

Cette atomisation est réalisée dans des conditions particulières de manière à granuler lesdites protéines de pois.

On choisit une tour d'atomisation MSD de 7.000 kg/h de capacité d'évaporation

L'air de séchage entre à une température comprise entre 200 et 250°C et ressort à une température comprise entre 70 et 90°C, le lit statique en bas de la tour étant chauffé par de l'air compris entre 80 et 90°C.

En sortie de la tour d'atomisation, le produit passe sur un lit fluide vibré où il est refroidi à température ambiante.

On peut procéder avantageusement au recyclage des fines directement en tête de la tour.

Un traitement thermique complémentaire peut être réalisé après l'étape de floculation thermique, et avant celle de granulation par atomisation, traitement effectué à une température de 75 à 95 °C pendant de 10 minutes à 1 heure.

Ce traitement thermique complémentaire, puis de granulation par atomisation permet l'obtention d'une composition de protéines de pois granulée.

La composition de protéines de pois conforme à l'invention peut être avantageusement utilisée, en raison de la qualité de ses paramètres structuraux, pour la fabrication de protéines de pois texturées.

Plus particulièrement, les protéines de pois texturées selon la présente invention sont caractérisées en ce qu'elles présentent :

- une reprise en eau comprise entre 5 et 6 g/g,
- une masse volumique comprise entre 80 et 90 g/l, de préférence comprise entre 85 et 90 g/l.

La mesure de la reprise en eau des protéines texturées de l'invention est effectuée selon un test mis au point par la société Demanderesse.

Le test consiste à introduire 20,0 g de l'échantillon de protéines de pois texturées à analyser, sous agitation, dans 380,0 g d'eau potable à 100°C (agitation magnétique à l'aide d'un barreau aimanté à 200 rpm).

On laisse ensuite les protéines de pois texturées s'hydrater pendant 10 minutes à température ambiante.

L'échantillon est alors récupéré sur un tamis métallique de 2.000 $\mu$m préalablement taré puis égoutté pendant 5 minutes.

La mesure de la reprise en eau (g/g) est alors calculée par le rapport entre (poids de l'échantillon réhydraté - poids de l'échantillon sec) et le poids de l'échantillon mis en oeuvre.

Le poids est déterminé sur une balance de laboratoire de sensibilité 0,1 g.

Les protéines de pois texturées de l'invention présentent alors une reprise en eau comprise entre 5 et 6 g/g.

La mesure de la densité des protéines texturées de l'invention est ensuite réalisée.

La mesure consiste tout d'abord à broyer et à tamiser un échantillon de protéines de pois texturées de manière à récupérer la fraction présentant une taille comprise entre 2.000 et 8.000 $\mu$m.

Le broyage est effectué sur un « ROBOT COUPE » R4 sur vitesse 1 pendant 30 secondes, et le tamisage est effectué sur tamiseur-vibreur « RETSCH » équipé de deux tamis de 2.000 et 8.000 $\mu$m

La masse volumique (g/l) est ensuite calculée par la mesure du (poids de protéines texturées nécessaire pour remplir une éprouvette graduée jusqu'à son trait de jauge 250 ml) multiplié par 4.

Les protéines de pois texturées conformes à l'invention présentent alors une masse volumique comprise entre 80 et 90 g/l, de préférence comprise entre 85 et 90 g/l.

Comme il sera présenté ci-après, les protéines texturées conformes à l'invention présentent un comportement équivalent, voire meilleur à celui des protéines de pois texturées que l'on peut obtenir à partir des isolats de protéines de pois du commerce, voire même à celui des protéines de soja texturées du commerce, prises ici comme référence, et ce pour des produits présentant une masse volumique bien plus faible.

A la connaissance de la société Demanderesse, il n'existe pas dans l'état de la technique de protéines de pois texturées présentant de telles propriétés fonctionnelles.

Les protéines de pois texturées présentent également une structure constituée de longues fibres bien orientées, et un indice de coloration d'une valeur comprise entre 75 et 95, de préférence comprise entre 79 et 81 dans la balance des blancs, comprise entre 1 et 5, de préférence comprise entre 2,5 et 3,5 dans la balance des rouges et comprise entre 10 et 30, de préférence comprise entre 23 et 27 dans la balance des jaunes.

La détermination de la structure des protéines de pois texturées conformes à l'invention consiste à évaluer, par analyse sensorielle, l'état fibreux des protéines obtenues.

Un jury de 10 personnes est constitué, chacune devant se prononcer sur le caractère « fibreux » ou « aggloméré » des produits texturés qui leur sont présentées. La synthèse des évaluations obtenues pour chaque échantillon permet des les comparer les uns par rapport aux autres, selon la notation suivante :

- notation « - » : pas de structure fibreuse, aspect aggloméré,
- notation « + » : structure agglomérée avec cependant présence de courtes fibres,
- notation « ++ » : structure fibreuse avec fibres courtes,
- notation « +++ » : structure fibreuse prononcée, avec des fibres longues et bien orientées.

Les protéines de pois texturées sont ainsi classées « +++ », i.e. présentant ainsi un aspect fibreux prononcé, sans zone agglomérée.

Le test colorimétrique consiste à déterminer, à l'aide d'un chromomètre CHROMOMETRE MINOLTA CR 200, la moyenne de balance des blancs (L), des rouges (a) et des jaunes (b) d'un échantillon de protéines de pois texturées broyé et tamisé.

Les conditions de broyage et de tamisage sont identiques à celles utilisées pour la mesure de la densité des protéines texturées présentée ci-dessus, mais on récupère ici la fraction de taille inférieure à 2.000 $\mu$m.

Cette poudre broyée est ensuite placée dans une boite transparente de pétri de 90 mm de diamètre.

On procède à la mesure de la couleur de l'échantillon, au travers de la boite de Pétri, par réflexion, à l'aide du chromomètre, en suivant les spécifications du constructeur.

La mesure est réalisée en triple, et exprimée en termes « L », pour le coefficient de brillance (noir(0) à brillant (+)), « a » pour le coefficient de vert (-) à rouge (+) et « b » pour le coefficient de bleu (-) à jaune (+).

Les protéines de pois texturées présentent une structure fibreuse tout à fait acceptable, conforme aux meilleures structures fibreuses des protéines de soja texturées, et un aspect colorimétrique équivalent, voire meilleur.

Les protéines de pois texturées sont enfin caractérisées par leur humidité résiduelle comprise entre 10 et 15 %, de préférence comprise entre 12 et 14 %.

La mesure de l'humidité résiduelle consiste à peser exactement 2,0 g d'échantillon à tester, et à en mesurer la teneur en eau sur balance SARTORIUS MA 40 Infrarouge à 135°C, en suivant les spécifications du constructeur.

L'humidité résiduelle est calculée par la formule suivante :

$$H\ (\%)\ =\ \frac{2,0\ -\ P_{ef}}{2,0}$$

Où $P_{ef}$ correspond au poids de l'échantillon après arrêt automatique de la pesée, qui survient lorsque l'appareil ne mesure plus de fluctuation du poids.

Les protéines de pois texturées conformes à l'invention sont susceptibles d'être préparées par cuisson-extrusion de la composition de protéines de pois granulée définies ci-avant.

La cuisson extrusion est réalisée par la succession des étapes suivantes :

- ajouter 0,4 % en poids de métasulfite de sodium et 2 % en poids de gypse à la composition de protéines de pois granulée selon l'une ou l'autre des revendications 1 et 2,
- introduire le mélange ainsi obtenu avec de l'eau dans un cuiseur extrudeur présentant une configuration bi-vis co-rotatives, préférentiellement à 5 fourreaux,
- conduire l'extrusion à une température de première chaudière comprise entre 80 et 90°C, et une température de deuxième chaudière comprise entre 150 et 190°C, et une vitesse de vis comprise entre 450 et 500 rpm,
- récupérer les protéines de pois texturées à la sortie de l'extrudeuse sous la forme d'un jonc.

La composition de protéines de pois est tout d'abord conditionnée avant l'opération de cuisson-extrusion, par ajout de 0,4 % de métasulfite de sodium et 2 % de gypse dans un mélangeur HOBART à 97,6 % de protéines de pois.

La société Demanderesse a trouvé que le métasulfite de sodium, à 0,4 % en poids/poids permet avantageusement de réduire la formation extemporanée de ponts disulfures dans les protéines lors du processus de cuisson extrusion, et facilite la formation des structure fibreuse et aérée des protéines texturées obtenues, et que le gypse, à 2 % en poids/poids permet de renforcer leur structure.

Le cuiseur extrudeur peut quant à lui présenter une configuration bi-vis co-rotatives, préférentiellement à 5 fourreaux.

Dans cette configuration, le fourreau 1 correspond à la zone d'alimentation/malaxage de la poudre de protéines dans l'extrudeur, zone dotée également d'une alimentation en eau réalisée sous le fourreau n°1 ; les fourreaux n°2 et n°3 correspondent à la zone de convoyage (apport d'énergie thermique) ; le fourreau n°4 correspond à la zone de fusion (apport d'énergies mécaniques - contre-filets - et thermiques), et la zone 5 est dédiée au convoyage et formage (expulsion par la filière).

La première filière présente 3 mm de diamètre, et la deuxième est obturée.

La configuration thermique du cuiseur-extrudeur est la suivante :

- Fourreaux 1 et 5 non chauffés,
- Fourreaux 2 et 3 chauffés par une première chaudière à huile à 90°C, afin d'apporter l'énergie thermique nécessaire

- Fourreau 4 chauffé par une deuxième chaudière à huile à 190°C (apport d'énergie mécanique par cisaillement important - double jeux de contre-filets - et apport complémentaire d'énergie thermique).

L'alimentation en poudre est effectuée par un doseur volumétrique, par exemple DOSAPRO MILTON ROY, et l'alimentation en eau potable sous le fourreau n°1 par une pompe par exemple de type ISMATEC MV.

Après expulsion de la filière, les protéines de pois texturées sont récupérées sous la forme d'un jonc et séchées à température ambiante.

Les protéines de pois texturées conformes à l'invention peuvent être avantageusement utilisées dans les applications alimentaires, dans les produits de type viande, poisson, plats cuisinés comme « extenders »,' ainsi que dans les produits végétariens et snacks comme texturant.

D'autres caractéristiques et avantages de l'invention apparaîtront à la lecture des exemples non limitatifs décrits ci-dessous.

**Exemple 1**

De la farine de pois est préparée par broyage de pois fourragers décortiqués sur broyeur à marteaux de type ALPINE équipé d'une grille de 100 $\mu$m.

300 kg de farine à 87 % de matière sèche sont ensuite mis à tremper dans de l'eau à la concentration finale de 25 % sur sec, à un pH de 6,5.

1044 kg de suspension de farine à 25 % de matière sèche (soit donc 261 kg de farine sèche) sont alors introduits avec 500 kg d'eau dans une batterie d'hydrocyclones composée de 14 étages. Elle est alimentée par la suspension de farine à l'étage n°5.

Cette séparation conduit à l'obtention d'une phase légère qui correspond à la sortie de l'étage n°1. Elle est constituée du mélange protéines, fibres internes et solubles.

Cette phase légère en sortie d'hydrocyclones renferme en mélange (142 kg sur sec au total) : les fibres (environ 14,8 % en poids, soit 21 kg sec), les protéines (environ 42,8 % en poids, soit 60,8 kg sec) et de solubles (environ 42,4 % en poids, soit 60,2 kg sec). Cette fraction présente une matière sèche de 10 %.

On procède à la séparation des fibres sur décanteurs centrifuges de type WESPHALIA employés dans une unité industrielle féculière de traitement de la pomme de terre.

La phase légère en sortie de décanteur centrifuge renferme un mélange de protéines et de solubles, tandis que la phase lourde renferme les fibres de pois. La phase lourde renferme 105 kg de fibres à 20 % de matière sèche. On constate que la quasi-totalité des fibres est bien retrouvée dans cette fraction.

Quant à la fraction protéines et solubles, elle renferme 1142 kg d'un mélange en solution de solubles et de protéines (fraction à 6 % de matière sèche).

On procède à la floculation des protéines à leur point isoélectrique par ajustement de la phase légère en sortie de décanteur centrifuge à un pH de 4,5 et chauffage à 60 °C par passage en tuyère.

Les protéines ainsi mises à floculer sont laissées 10 minutes en cuve de maturation. On procède ensuite à la séparation solubles / protéines sur décanteur centrifuge.

Le mélange obtenu en sortie de la cuve de maturation alimente alors la décanteuse centrifuge à un débit de 5 m$^3$/h. La phase lourde, ou « floc », d'une matière sèche de 35 % est diluée à 18 % par ajout d'eau. Le pH du floc de 4,5 est rectifié à une valeur de 7,5 par ajout de soude.

On procède sur le floc ainsi obtenu à un traitement thermique à 85°C pendant 10 minutes sur échangeur thermique à surface raclée. On procède enfin à une atomisation sur tour MSD (Multi Stage Dryer) dans les conditions suivantes.

On choisit une tour d'atomisation MSD de 4.000 kg/h de capacité d'évaporation, et on l'alimente avec la composition de protéines de pois granulée à raison de 2.000 kg/h. L'air de séchage entre à 180°C et ressort à 80°C, le lit statique en bas de la tour étant réchauffé par de l'air à 80°C.

En sortie de la tour d'atomisation, le produit passe sur un lit fluide vibré où il est refroidi à température ambiante. On peut procéder avantageusement au recyclage des fines directement en tête de la tour.

L'ensemble de ces opérations permet l'obtention d'une composition de protéines de pois granulée présentant les caractéristiques figurées dans le tableau I suivant.

Tableau I

| | Composition de protéines de pois granulée obtenue |
|---|---|
| Teneur en protéines totales (% N x 6,25 sur sec) | 84 |
| Répartition granulométrique % de particules de taille > à : | |

(suite)

|  | Composition de protéines de pois granulée obtenue |
|---|---|
| 800 μm | 0 |
| 500 μm | 0,1 |
| 315 μm | 0,8 |
| 250 μm | 56,6 |
| 200 μm | 79,6 |
| 150 μm | 84,8 |
| 100 μm | 92 |
| 80 μm | 93,6 |
| 63 μm | 95,4 |
| 50 μm | 95,6 |
| 40 μm | 96,8 |
| % de particules < à | |
| 40 μm | 3,2 |
| Diamètre moyen (μm) | 260 |
| Valeur de compressibilité (%) | 8,1 |
| Densité tassée (g/ml) | 0,555 |
| Humidité résiduelle (%) | 8,4 |
| Teneur en matières grasses extractibles (%) | 0,5 |

Exemple 2

La composition protéique granulée préparée en appliquant le procédé décrit dans l'exemple 1 est comparée, dans le tableau II suivant, à des isolats de protéines du commerce commercialisés par les sociétés COSUCRA et PARRHEIM.

Tableau II

|  | PISANE® HD COSUCRA | PROPULSE™ PARRHEIM | Composition de protéines de pois granulée conforme à l'invention |
|---|---|---|---|
| Teneur en protéines totales (% N x 6,25 sur sec) | 88.4 | 84.5 | 84 |
| Répartition granulométrique % de particules de taille > à : | | | |
| 800 μm | 0 | 0 | 0 |
| 500 μm | 0 | 0 | 0,1 |
| 315 μm | 0,1 | 0 | 0,8 |
| 250 μm | 0,3 | 0 | 56,6 |
| 200 μm | 1 | 0 | 79,6 |
| 150 μm | 1,4 | 0,1 | 84,8 |
| 100 μm | 7,3 | 2,4 | 92 |
| 80 μm | 13,8 | 7,6 | 93,6 |
| 63 μm | 34,2 | 28 | 95,4 |
| 50 μm | 42,1 | 37,8 | 95,6 |
| 40 μm | 61,4 | 59,4 | 96,8 |
| % de particules < à | | | |
| 40 μm | 38,6 | 40,6 | 3,2 |
| Diamètre moyen (μm) | 45 | 44 | 260 |

(suite)

| | PISANE® HD COSUCRA | PROPULSE™ PARRHEIM | Composition de protéines de pois granulée conforme à l'invention |
|---|---|---|---|
| valeur de compressibilité (%) | 45,05 | 45,95 | 8,1 |
| Densité tassée (g/ml) | 0,455 | 0,555 | 0,555 |
| Humidité résiduelle (%) | 10,2 | 9,7 | 8,4 |
| Teneur en matières grasses extractibles (% sur sec) | 1.2 | 1.9 | 0,5 |

La composition de protéines de pois granulée conforme à présente une meilleure aptitude à l'écoulement (valeur de compressibilité inférieure au seuil de 20 %), une granulométrie plus élevée et une teneur en matières grasses extractibles beaucoup plus faible que les isolats de protéines de pois accessibles dans le commerce.

Ces propriétés particulières les destineront bien mieux comme matières premières pour la fabrication de protéines de pois texturées.

Exemple 3

On prépare deux lots de protéines de pois texturées par cuisson-extrusion de la composition de protéines de pois de l'exemple 1, et comme témoins, on utilise les mêmes lots de PISANE® HD et de PROPULSE™ que ceux également décrits dans l'exemple 1.

Les quatre séries de paramètres de la cuisson-extrusion, réalisée sur un cuiseur BÜHLER de type DNDL 44 bi-vis co-rotatives à 5 fourreaux sont présentés dans le tableau III suivant.

Tableau III

| | PISANE® HD COSUCRA | PROPULSE PARRHEIM | Lot 1 | Lot 2 |
|---|---|---|---|---|
| Repère doseur / Débit mélange (Kg/h) | 8 / 28,23 | 8 / 24,9 | 8 / 22,40 | 8 / 22,40 |
| Repère pompe / Débit d'eau (1/h) | 290 / 2,45 | 250 / 2,09 | 350 / 5,20 | 400 / 5,90 |
| Vitesse de vis (rpm) | 365,7 | 366 | 475 | 475 |
| Pression (bar) | 52 | 70-100 | 43 | 35 |
| Tp chaudière n°1 (°C) | 80 | 80 | 80 | 90 |
| Tp chaudière n°2 (°C) | 150 | 150 | 150 | 190 |
| Tp sortie (°C) | 163 | 175-180 | 177 | 173 |

Les produits, une fois séchés à température ambiante, présentent l'ensemble des propriétés fonctionnelles figurées dans le tableau IV suivant.

Tableau IV

| | PISANE® HD COSUCRA | PROPULSE PARRHEIM | Lot 1 | Lot 2 |
|---|---|---|---|---|
| Teneur en protéines totales (% N x 6,25) | 92 | 92,2 | 81,2 | 79,2 |
| Reprise en eau (g/g) | 6 | 4,4 | 5,3 | 5,4 |
| Masse volumique (g/l) | 171,2 | 72 | 87 | 87,7 |
| Texture fibreuse | +++ | + | +++ | +++ |

(suite)

|  | PISANE® HD COSUCRA | PROPULSE PARRHEIM | Lot 1 | Lot 2 |
|---|---|---|---|---|
| Coloration<br>L : balance des blancs<br>a : balance des rouges<br>b : balance des jaunes | 82,61<br>+ 0,71<br>+ 24,94 | 100,58<br>+ 0,12<br>+ 1,89 | 80,59<br>+ 2,68<br>+ 23,89 | 79,22<br>+ 3,36<br>+ 25,97 |
| Humidité SARTORIUS (%) | 13,28 | 11,69 | 12,08 | 13,77 |

Les protéines de pois texturées (lots 1 et 2), obtenues par cuisson-extrusion de la composition de protéines de pois granulée conforme à l'invention de l'exemple 1 sont de très bonnes qualités, nettement supérieures à celles obtenues à partir de l'isolat de protéines de pois PROPULSE™.

Les protéines de pois texturées (lots 1 et 2) présentent une capacité d'eau importante, pour une masse volumique supérieure à celles préparées à partir de la de la PROPULSE™ et significativement plus faible que celles préparés à partir de la PISANE® HD.

La structure des protéines de pois texturées (lots 1 et 2) est bien orientée, avec un aspect fibreux bien dessiné.

La coloration des protéines de pois texturées (lots 1 et 2) est tout à fait satisfaisante.

Le tableau V suivant présente le résultat d'une étude comparative réalisée entre les protéines de pois texturées conformes à l'invention par rapport aux protéines texturées de blé et de soja commercialement disponibles.

Tableau V

| Nom commercial | WHEATPRO | RESPONSE SOY 4410 | DANPROTEX B 50 TS | PTB 60 | TEXTURATEIN | |
|---|---|---|---|---|---|---|
| Fabriquant | FPS | Rector Foods Limited | FPS | Sotexpro | Cargill | Protéines de pois texturées conformes à l'invention |
| Origine botanique | Blé | soja | soja | blé | soja | pois |
| Reprise en eau (g/g) | 4 | 3,4 | 6,5 | 6,8 | 6,5 | 5 - 6 |
| Masse volumique (g/l) | 139,6 | 292,4 | 237,6 | 129,2 | 649,2 | 80 - 90 |
| Coloration<br>L : balance des blancs<br>a : balance des rouges<br>b : balance des jaunes | 91,09<br>+ 2,19<br>+ 15,91 | 69,71<br>+ 3,37<br>+ 20,11 | 75,09<br>+ 2,50<br>+ 18,32 | 79,13<br>+ 2,72<br>+ 17,21 | 75,25<br>+ 5,24<br>+ 20,56 | 79 - 81<br>2,5 - 3,5<br>23 - 27 |
| Humidité SARTORIUS (%) | 10,4 | 8,4 | 10,6 | 9,3 | 10,4 | 10 - 15 |

Les protéines de pois texturés obtenues selon l'invention ont des propriétés proches des protéines texturées préparées à partir du soja, et supérieures aux protéines de pois texturées préparées à partir du blé, à savoir une bonne rétention d'eau, une faible masse volumique et une structure fibreuse bien orientée.

**Revendications**

1. Protéines de pois texturées **caractérisées en ce qu'**elles présentent :

   - une reprise en eau comprise entre 5 et 6 g/g, la mesure de la reprise en eau étant effectuée selon un test consistant à introduire 20,0 g d'un échantillon de protéines de pois texturées à analyser sous agitation dans 380,0 g d'eau potable à 100 °C, à laisser les protéines de pois texturées s'hydrater pendant 10 minutes à température ambiante, à récupérer l'échantillon sur un tamis métallique de 2.000 $\mu$m préalablement taré puis égoutté pendant 5 minutes et à calculer la reprise en eau (g/g) par le rapport entre (poids de l'échantillon réhydraté - poids de l'échantillon sec) et le poids de l'échantillon mis en oeuvre,
   - une masse volumique comprise entre 80 et 90 g/l, de préférence comprise entre 85 et 90 g/l.

2. Protéines de pois texturées selon la revendication 1, **caractérisées en ce qu'**elles présentent :

   - une structure présentant des fibres longues et bien orientées,
   - un indice de coloration d'une valeur comprise entre 75 et 95, de préférence comprise entre 79 et 81 dans la balance des blancs, comprise entre 1 et 5, de préférence comprise entre 2,5 et 3,5 dans la balance des rouges et comprise entre 10 et 30, de préférence comprise entre 23 et 27 dans la balance des jaunes.

3. Protéines de pois texturées selon l'une ou l'autre des revendications 1 et 2, **caractérisées en ce qu'**elles présentent une humidité résiduelle comprise entre 10 et 15 %, de préférence comprise entre 12 et 14 %.

4. Procédé de préparation des protéines de pois texturées selon l'une quelconque des revendications 1 à 3, **caractérisé en ce qu'**il consiste en une cuisson-extrusion d'une composition de protéines de pois granulée présentant :

   - une teneur en protéines sur matière sèche comprise entre 70 et 95 % en poids sur sec, de préférence comprise entre 70 et 90 % en poids sur sec, plus préférentiellement entre 70 et 88 % en poids sur sec et plus préférentiellement encore compris entre 80 et 85 % en poids sur sec,
   - un diamètre moyen compris entre 150 et 300 $\mu$m,
   - une valeur de compressibilité, déterminée en utilisant l'appareil POWDER TESTER type PTE commercialisé par la société HOSOKAWA selon la méthode préconisée dans le mode d'emploi dudit POWDER TESTER, comprise entre 5 et 15 %, de préférence comprise entre 8 et 13 %.

5. Procédé selon la revendication 4, **caractérisé en ce que** la cuisson extrusion est réalisée par la succession des étapes suivantes :

   - ajouter 0,4 % en poids de métasulfite de sodium et 2 % en poids de gypse à la composition de protéines de pois granulée,
   - introduire le mélange ainsi obtenu avec de l'eau dans un cuiseur extrudeur présentant une configuration bi-vis co-rotatives, préférentiellement à 5 fourreaux,
   - conduire l'extrusion à une température de première chaudière comprise entre 80 et 90°C, et une température de deuxième chaudière comprise entre 150 et 190°C, et une vitesse de vis comprise entre 450 et 500 rpm,
   - récupérer les protéines de pois texturées à la sortie de l'extrudeuse sous la forme d'un jonc et laisser sécher à température ambiante.

6. Utilisation des protéines de pois texturées selon l'une quelconque des revendications 1 à 3 dans les applications alimentaires, dans les produits de type viande, poisson, plats cuisinés comme « extenders », ainsi que dans les produits végétariens et snacks comme texturant.

**Claims**

1. Textured pea proteins, **characterized in that** they have:

   - a water uptake ranging from 5 to 6 g/g, the water uptake being measured according to a test consisting of introducing 20.0 g of the sample of textured pea proteins to be analyzed, with stirring, into 380.0 g of drinking water at 100°C, leaving the textured pea proteins to hydrate for 10 minutes at ambient temperature, recovering the sample on a pre-tared metal screen of 2000 $\mu$m, and then drained for 5 minutes, and calculating the water uptake (g/g) by the ratio of the (weight of the rehydrated sample-weight of the dry sample) to the weight of the sample used.
- a density ranging from 80 to 90 g/l, preferably ranging from 85 to 90 g/l.

2. Textured pea proteins as claimed in claim 1, **characterized in that** they have:

- a structure having long and well-oriented fibres,
- a colour index having a value ranging from 75 to 95, and preferably ranging from 79 to 81 in the balance of whites, ranging from 1 to 5, preferably ranging from 2.5 to 3.5 in the balance of reds, and ranging from 10 to 30, preferably ranging from 23 to 27 in the balance of yellows.

3. The textured pea proteins as claimed in claim 1 or 2, **characterized in that** they have a residual moisture content ranging from 10% to 15%, preferably ranging from 12% to 14%.

4. A method for preparing textured pea proteins according to anyone of claims 1 to 3, **characterized in that** it consists of cooking-extruding a granulated pea protein composition having:

- a protein content expressed in terms of solids ranging from 70% to 95% by weight on a dry weight basis, preferably from 70% to 90% by weight on a dry weight basis, more preferably from 70% to 88% by weight on a dry weight basis, and even more preferably from 80% to 85% by weight on a dry weight basis,
- a mean diameter ranging from 150 to 300 $\mu$m,
- a compressibility value, determined with a POWDER TESTER PTE type apparatus, commercialized by the HOSOKAWA company, according to the method recommended in the operating instructions manual of said POWDER TESTER apparatus, ranging from 5% to 15%, preferably from 8% to 13%.

5. The method as claimed in claim 4, **characterized in that** the cooking-extrusion is carried out by the succession of the following steps:

- adding 0.4% by weight of sodium metasulfite and 2% by weight of gypsum to the granulated pea protein composition,
- introducing the mixture thus obtained with water into a cooking-extruding device having a co-rotating twin-screw configuration, preferably with 5 barrels,
- carrying out the extrusion at a first-boiler temperature ranging from 80 to 90°C., and a second-boiler temperature ranging from 150 to 190° C., and a screw speed ranging from 450 to 500 rpm,
- recovering the textured pea proteins at the extruder outlet in the form of a string and leaving to dry at ambient temperature.

6. Use of the textured pea proteins as claimed in any one of claims 1 to 3, in food applications, as extenders in meat, fish, ready meals type products, and also in vegetarian products and snack as texturing agent.

**Patentansprüche**

1. Texturierte Proteine aus Erbsen, **dadurch gekennzeichnet, dass** sie aufweisen:

- eine Aufnahme von Wasser, umfassend zwischen 5 und 6 g/g, wobei das Messen der Aufnahme von Wasser durch einen Test erfolgt, der darin besteht 20,0 g einer Probe von texturierten Proteinen aus Erbsen, die zu analysieren ist, unter Rühren in 380,0 g Trinkwasser bei 100 °C einzubringen, die texturierten Proteine aus Erbsen für 10 Minuten bei Raumtemperatur hydratisieren zu lassen, Zurückgewinnen der Probe auf einem Metallsieb mit 2000 $\mu$m, das zuvor tariert wurde, danach abtropfenlassen für 5 Minuten und Berechnen der Aufnahme von Wasser (g/g) durch das Verhältnis zwischen (Gewicht der rehydratisierten Probe-Gewicht der trockenen Probe) und dem Gewicht der eingesetzten Probe,
- eine Volumenmasse, umfassend zwischen 80 und 90 g/l, vorzugsweise umfassend zwischen 85 und 90 g/l.

2. Texturierte Proteine aus Erbsen nach Anspruch 1, **dadurch gekennzeichnet, dass** sie aufweisen:

- eine Struktur, die lange und gut orientierte Fasern aufweist,
- einen Farbindex mit einem Wert, umfassend zwischen 75 und 95, vorzugsweise umfassend zwischen 79 und

EP 2 272 379 B1

81 im Weißabgleich, umfassend zwischen 1 und 5, vorzugsweise umfassend zwischen 2,5 und 3,5 im Rotabgleich und umfassend zwischen 10 und 30, vorzugsweise umfassend zwischen 23 und 27 im Gelbabgleich.

3. Texturierte Proteine aus Erbsen nach einem der Ansprüche 1 und 2, **dadurch gekennzeichnet, dass** sie eine Restfeuchte aufweisen, umfassend zwischen 10 und 15 %, vorzugsweise umfassend zwischen 12 und 14 %.

4. Verfahren zur Herstellung der texturierten Proteine aus Erbsen nach einem der Ansprüche 1 bis 3, **dadurch gekennzeichnet, dass** es aus einer Kochextrusion einer granulierten Zusammensetzung von Erbsenproteinen besteht, die aufweist:

   - einen Gehalt von Proteinen, bezogen auf die Trockenmasse, umfassend zwischen 70 und 95 % Trockengewicht, vorzugsweise umfassend zwischen 70 und 90 % Trockengewicht, mehr bevorzugt zwischen 70 und 88 % Trockengewicht und noch mehr bevorzugt, umfassend zwischen 80 und 85 % Trockengewicht,
   - einen mittleren Durchmesser, umfassend zwischen 150 und 300 μm,
   - einen Komprimierbarkeitswert, bestimmt unter Verwendung des Geräts POWDER TESTER, Typ PTE, vertrieben von der Firma HOSOKAWA, entsprechend dem Verfahren, das in der Bedienungsanleitung des POWDER TESTER empfohlen wird, umfassend zwischen 5 und 15 %, vorzugsweise umfassend zwischen 8 und 13 %.

5. Verfahren nach Anspruch 4, **dadurch gekennzeichnet, dass** die Kochextrusion durch die Aufeinanderfolge der folgenden Schritte erfolgt:

   - Zugeben von 0,4 Gewichtsprozent Natriummetasulfit und 2 Gewichtsprozent Gips zur granulierten Zusammensetzung von Erbsenproteinen,
   - Einbringen des so erhaltenen Gemischs mit Wasser in einen Kochextruder, der ein Gleichdralldoppelschneckenextruder ist, vorzugsweise mit 5 Gehäusen,
   - Durchführen der Extrusion bei einer ersten Erhitzungstemperatur, umfassend zwischen 80 und 90 °C, und einer zweiten Erhitzungstemperatur, umfassend zwischen 150 und 190 °C und einer Schneckengeschwindigkeit, umfassend zwischen 450 und 500 UpM,
   - Gewinnen der texturierten Proteine aus Erbsen am Auslass des Extruders in stabförmiger Form und Trocknenlassen bei Umgebungstemperatur.

6. Verwendung der texturierten Proteine aus Erbsen nach einem der Ansprüche 1 bis 3 in Lebensmittelanwendungen, in Fleischprodukten, Fischprodukten, in Fertiggerichten als "Streckmittel", als auch in vegetarischen Produkten und Imbissen als Texturmittel.

**EP 2 272 379 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3870812 A
- FR 2340054
- FR 2827123
- EP 1400537 A

**Littérature non-brevet citée dans la description**

- **J. CULIOLI ; P. SALE.** *Sciences des aliments,* 1985, vol. 5, 177-196
- **ALONSO et al.** *Journal of the Science of Food and Agriculture,* 2000, vol. 80, 397-403
- **LUCAS.** *Food Trade Review,* 1996, vol. 66-9, 53
- **WANG et al.** *Journal of Food Science,* 1999, vol. 64-3, 509-513